# EUROPEAN PATENT APPLICATION

(11) **EP 2 605 450 A1**
(43) Date of publication of application: **19.06.2013**
(21) Application number: 11816446.6
(22) Date of filing: 03.08.2011
(51) Int. Cl.: H04L 12/24, H04L 12/26, H04L 12/56

(54) **NETWORK INFORMATION PROCESSING SYSTEM, NETWORK INFORMATION PROCESSING APPARATUS, AND INFORMATION PROCESSING METHOD**

(30) Priority: 11.08.2010 JP 2010179948
(71) Applicant: NEC Corporation, Tokyo 108-8001 (JP)
(72) Inventor: NISHIOKA, Itaru, Tokyo 108-8001 (JP)
(74) Representative: Robson, Aidan John
(86) International application number: PCT/JP2011/068211
(87) International publication number: WO 2012/020782

(57) **Abstract**

Provided is a network information processing system, wherein the construction of an information processing system of the whole network is simplified, and network control intended by a user is able to be implemented, and which is provided with: a first network information processing apparatus for managing and controlling a first communication network; and a second network information processing apparatus for managing and controlling a second communication network that contains at least a portion of the first communication network therein. The first network information processing apparatus comprises: a converting means for converting the network connection construction of the construction section of the second communication network, which is related to the first communication network, into the form of a user provided network that is specialized to meet the second communication network under a prescribed conversion rule; and a transmitting means for transmitting the user provided network to the second network information processing apparatus. The second network information processing apparatus comprises a managing means for managing the second communication network on the basis of the user provided network.

## Description

### TECHNICAL FIELD

The present invention relates to a network information processing system, a network information processing apparatus and a data processing method, and in particular, to a network information processing system, a network information processing apparatus and a data processing method of cooperative type that can be controlled in a coordinated manner by those having network privileges different from each other.

### BACKGROUND ART

With penetration of the internet and a rapid progress of broadband network realization, a spread of a broadband core network and its efficient network control are required so as to deal with realization of an ultra high speed, a large capacity and diversifying services.

Therefore, establishing the core network with photonic networks has become a main stream, and realization of network control, which can be operated mutually among different communications carriers, is required.

Furthermore, cooperative network control by those having network privileges different from each other, such as between a user and a communications carrier or between communications carriers.

In order to realize the mutual operation and the corporative control, the method of installing a unified interface between the user and a communication network of the communications carrier or between communication networks of the different communications carriers, and performing request/response for the network control via the interface, is adopted. Further, the interface at a boundary between the communication network of the communications carrier and the user is called UNI (User-Network Interface). Furthermore, the interface at a boundary between the communication networks of different communication carriers is called NNI (Network-Network Interface).

A typical example of the UNI is disclosed by non-patent document 1 (Osama Aboul-Magd, et al. "User Network Interface (UNI) 1.0 Signaling Specification" (Figure 1-1) and non-patent document 2 (Stephen Shew, et al. "User Network Interface (UNI) 2.0 Signaling Specification: Common Part, "OIF Implementation Agreement (www.oifbrum.com), Feb. 2008. (Figure 5-2). The non-patent document 1 relates to the signal specification (UNI 1.0) for the mutual operation of control planes specified by the OIF (Optical Interworking Forum). The non-patent literature 2 relates to the signal specification (UNI 2.0) also specified by the OIF. Further, the OIF is building specifications for a physical and logical interface between an IP network and a photonic network, developing products and services which can be mutually operated in a ulti-vendors environment, and cultivating market by performing public relations activity.

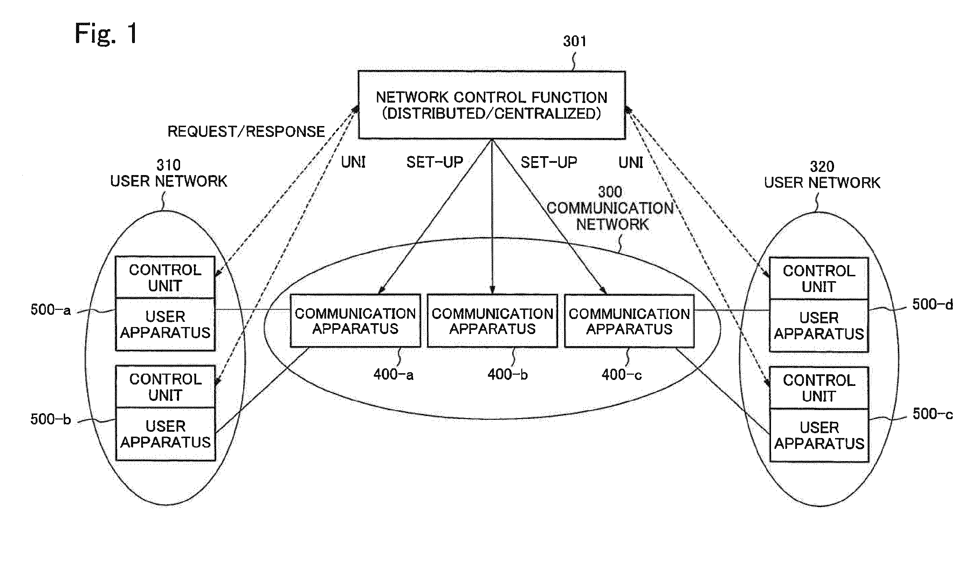

Fig. 1 is a block diagram indicating a network information processing system of the client server type of the related art.

The non-patent literature 1 and the non-patent literature 2 make an argument based on an assumption of the server client type system configuration, in which a user apparatus of the user network, as shown in Fig. 1, requests network control for the communication network of the communications carrier using the UNI. In other words, here, in the network configuration, in which user networks 310 and 320 are connected to the communication network 300, user apparatus 500-a and b exist in the user network 310 in the communication network 310, and user apparatus 500-c and d exist in the user network 320. Then, each of the user apparatuses 500-a to d asks the network control to the communication network 300 using the UNI (a dotted arrow in the figure).

Here, as an example, the communication network 300 is a network of a communications carrier that provides wide area communication services, and the user networks 310 and 320 are corporate networks which receive the wide area communication services. As another example, the communication network 300 is a transmission network of a wide area transmission operating division of the communications carrier, and the user networks 310 and 320 may be IP networks of a service operating division of the communications carrier or an Ethernet (registered trademark) network.

Network control function 301 of the communication network 300 may be either a form of a control software loaded in a server which is intensively deployed in the communication network or that of an embedded control software which is loaded in each communication apparatus that is deployed in the communication network.

This system operates as follows.

When a communication path is established between the user apparatuses of the user network 310 and of the user network 320 (from user apparatus 500-a to user apparatus 500-d, for example), the user apparatus 500-a requests the path set-up to the network control function 301 via the UNI from its own control unit. The network control function 301, which receives the request for the circuit set-up, sets up the communication path between communication apparatuses (communication apparatuses 400-a to c), which make connection between the user apparatus 500-a and the user apparatus 500-d. The network control function 301 performs various control operations such as user authentication, policy control, optimum path selection and configuring apparatus, when this communication path is set up.

As other documents concerning the network control and the network management, there are Japanese Patent Application Laid-Open No. 2000-040047 and Japanese Patent Application Laid-Open No. Hei-09-065386.

Japanese Patent Application Laid-Open No. 2000-040047 discloses a network cooperative management method which enables a plurality of network management systems to manage in a cooperative manner where the operations do not overlap with each other when the plurality of network management systems manage the same network,

For example, this assumes a case where a client responds a network control in an emergency situation while the network management is being usually outsourced. In such a case, network management systems are installed in both of the outsourcing destination and the outsourcing source, and manage the same area. In other words, each of the network management system in the outsourcing destination and the network management system in the outsourcing source manages the same area. And because the respective roles, equipments, skills and policies are different, the functions and configurations of the respective network management systems are not always the same.

In the network cooperative management method disclosed in Japanese Patent Application Laid-Open No. 2000-040047, the cooperative management platform is provided which shares management information and definition information of the respective network management systems. This cooperative management platform has the following two functions which work on a network. The first function is a function to steadily collect/count a handling status of each network management system for traps and events of each network management system and to reflect the collected result to the data which record the handling status for the traps and events of each network management system. And the second function is a function to acquire the definition information on the management information from the respective network management systems, to check whether they are the same, and to match the definition information to a specific network management system among the network management systems.

Japanese Patent Application Laid-Open No. Hei-09-065386 discloses a communication service control system which enables to establish mutual communication relation of users or information sources in a whole network area using the information which the network can collect. This communication service control system is a control system whose object is a communication network consisting of transmission links, switching systems connected to the transmission links and communication terminals which users send and receive.

This control system stores/manages the first network information on the communication traffic of the network, the event histories, the subscriber information, the network configuration information and the like using the information collecting apparatus periodically or on an event occurrence. And then, in the information control apparatus, the required information is extracted from the first network information processing/editing and information compressing is performed in a proper form for storing/managing, and is stored/managed as the second network information. Furthermore, in the control apparatus related to communication, the communication relating information on the calculation value that is calculated based on the communication frequency, communication time and communication amount of the information from the second network information extracts the same area of user group, then a service is provided using this.

### Disclosure of invention

### Technical Problem

However, the system that the non-patent document 1 and the non-patent document 2 have presupposed has the following problem.

A communications carrier usually has its own unique extended protocol function and policy used in its own communication network in order to provide the original services different from other companies. And a client server type system configuration is employed from the view point of the security reinforcement and concealing the complexity for the users, and completely conceals the communication network configuration information on the communications carrier for the users. Therefore, even if a user tries the network control by his intension, it cannot be done.

Hence, a user does not find whether the unused bandwidth is prepared enough for the communication required in the communication network of the communications carrier until requesting to the communication network. Accordingly, even if the communication set-up is requested, it may fail to set up consequently. The user cannot optimize the route by himself when the communication path is set up which connects a plurality of bases using the communication network of the communications carrier. In addition, when a plurality of obstacles occur in the communication network, a bypass measure cannot be considered by the user.

When the user network and the communications carrier communication network are overlooked generally from the view point of network control, the system configuration becomes complicated. This is caused by that the control function is duplicated since the same control function as the communication network of the communications carrier is also equipped in the user network constructed using the communication network of the communications carrier. The network control may become unstable as a whole by the simultaneous operating of both control functions when the events such as obstacles take place, due to the cause that the control functions are duplicated in this way.

The network cooperative management method which Japanese Patent Application Laid-Open No. 2000-040047 discloses relates to the function to match the definition information on management information on the network to the specific network management system, and is not the technology for a user to control the communication network of the communications carrier whose authority is different.

The communication service control system which Japanese Patent Application Laid-Open No. Hei-09-065386 discloses is to provide the communication services using the information which the network can collect, and is not the technology for the user to control the communication network of the communications carrier whose authority is different.

The object of the present invention is to simplify the configuration of the information processing system of the whole network, and also provide a network information processing system, a network information processing apparatus and a data processing method which can perform the network control according to the user intention.

### Solution to Problem

In order to achieve the above object, a network information processing system, in one exemplary embodiment of the present invention, includes: a first network information processing apparatus that manages and controls a first communication network; and a second network information processing apparatus which manages and controls the second communication network that includes at least a part of the first communication network, wherein the first network information processing apparatus includes: a converting means, which converts a network connection configuration of a configuration component concerning the first communication network of the second communication network into a form of a user providing network specialized in the second communication network under a predetermined conversion rule; and a transmitting means which transmits the user providing network to the second network information processing apparatus, and the second network information processing apparatus includes a management means which manages the second communication network based on the user providing network.

A network information processing apparatus, in one exemplary embodiment of the present invention includes: a network information collection/network configuration management means which acquires and manages network connection configuration information on a first communication network; a network configuration converting means which generates a user providing network which has converted a network connection configuration of a configuration component concerning the first communication network, which the network information collection/network configuration management means of the second communication network including at least a part of the first communication network manages, into a form specialized in the second communication network according to a procedure that has combined predetermined conversion rules; and an information sending and receiving means which transmits the user providing network that the network configuration converting means has generated to a user operation apparatus which manages and controls the second communication network, wherein the first communication network is managed and controlled.

A network information processing apparatus which manages and controls the second communication network, in one exemplary embodiment of the present invention includes: a user application network configuration converting means which receives the transmission from a network management apparatus which manages and controls a first communication network as a user providing network which has converted a network connection configuration of a configuration component concerning the first communication network in the second communication network that includes at least a part of the first communication network to the form specialized in the second communication network according to a procedure that has a combined predetermined rule, and manages the user providing network as the second communication network; and an operation function means which manages and controls a configuration component of the second communication network that the user application network configuration management means manages, wherein the user application network configuration management means transmits a control request corresponding to the control to the network management apparatus and controls the configuration component to which the first communication network corresponds when the operation function means controls the second communication network to the configuration component.

A network information processing method, in one exemplary embodiment of the present invention, includes: converting at the first network information processing apparatus, which manages and controls the first communication network, a network connection configuration of the configuration component concerning the first communication network of a second communication network which includes at least a part of the first communication network to a form of the user providing network specialized to the second communication according to a predetermined conversion rules; transmitting the user providing network to the second network information processing apparatus that manages and controls the second communication network; and managing at the second network information processing apparatus the second communication network based on the transmitted user providing network.

A network information processing method, in one exemplary embodiment of the present invention, includes: acquiring network connection configuration information on a first communication network, generating a user providing network which has been converted from a network connection configuration of a configuration component concerning the first communication network of a second communication network that includes at least a part of the first communication network to a form specialized in the second communication network based on a procedure that has combined a predetermined conversion rule; managing a procedure which has combined the generated user providing network and the predetermined conversion rule concerning the predetermined identification information that corresponds the second communication network; and transmitting the user providing network to the user operation apparatus which manages and controls the second communication network.

A network information processing method, in one exemplary embodiment of the present invention, includes: transmitting a network connection configuration of a configuration component concerning the first communication network of a second communication network which includes at least a part of the first communication network, from a network management apparatus which manages and controls the first communication network as a user providing network that is converted to a form specialized in the second communication network based on the predetermined conversion rule; managing the user providing network as the second communication network; and transmitting a control request corresponding to the control, and the corresponding configuration component of the first communication network controlling when the control is executed to the configuration component of the second communication network.

### Advantageous Effects of Invention

The present invention can simplify the configuration of the information processing system of the whole network. The present invention can carry out the network control according to the user intension.

### BRIEF DESCRIPTION OF DRAWINGS

Fig. 1 is a block diagram which indicates a network information processing system of the client server type which is the related technology.
Fig. 2 is a block diagram which shows a network information processing system in the embodiment of the present invention.
Fig. 3 is a block diagram which shows a configuration of the network management apparatus in the embodiment of the present invention.
Fig. 4 is a block diagram which shows a configuration of the user operation apparatus in the embodiment of the present invention.
Fig. 5 is a figure which shows a conversion concept of the network configuration information in the embodiment of the present invention.
Fig. 6 is a flow chart which shows a conversion procedure of the network configuration information in the embodiment of the present invention.
Fig. 7 is a figure which shows a conversion concept of network configuration information in the embodiment of the present invention.
Fig. 8 is a block diagram which shows a conversion example of the network configuration information in the embodiment of the present invention.
Fig. 9 is a block diagram which shows a different conversion example of the network configuration information in the embodiment of the present invention.
Fig. 10 is a flow chart which shows a control procedure using the user operation apparatus in the embodiment of the present invention.
Fig. 11 is a block diagram which shows a control procedure using the user operation apparatus in the embodiment of the present invention.
Fig. 12 is a flow chart which shows an event notification procedure from the network management apparatus in the embodiment of the present invention.
Fig. 13 is a block diagram which shows an event notification procedure from the network management apparatus in the embodiment of the present invention.
Fig. 14 is a block diagram which shows a network information processing system in the basic embodiment of the present invention.
Fig. 15 is a block diagram which shows a network information processing apparatus in the basic embodiment of the present invention.
Fig. 16 is a block diagram which shows a different network information processing apparatus in the basic embodiment of the present invention.
Fig. 17 is a flow chart which shows a network information processing method in the basic embodiment of the present invention.
Fig. 18 is a flow chart which shows a different network information processing method in the basic embodiment of the present invention.
Fig. 19 is a flow chart which shows another network information processing method in the basic embodiment of the present invention.

### Description of Embodiments

The best embodiment for implementing the present invention will be described referring to drawings. Further, the embodiment is an example and the apparatus and the system which are disclosed are not limited to the configuration of the embodiment mentioned below.

First, the basic embodiment of the present invention will be described.

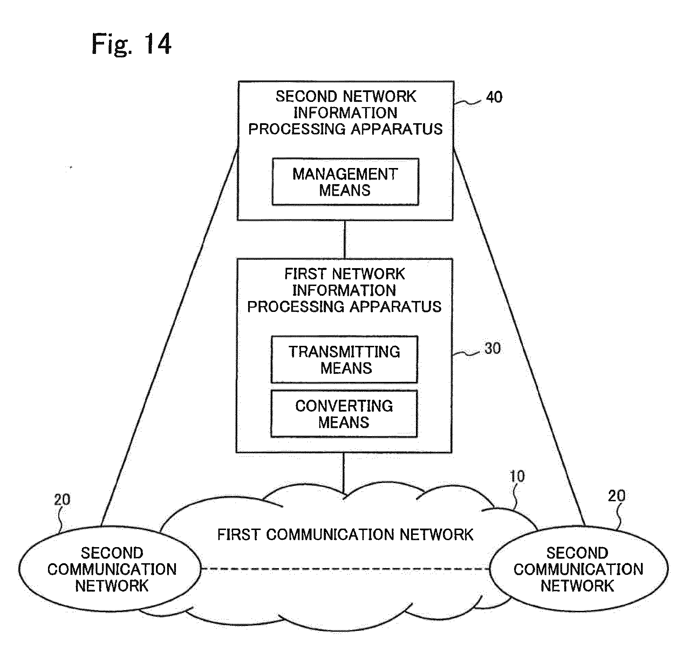

Fig. 14 is a block diagram which shows a network information processing system in the basic embodiment of the present invention.

This network information processing system includes the first network information processing apparatus 30 that manages and controls the first communication network 10 and the second network information processing apparatus 40 that manages and controls the second communication network 20 including at least a part of the first communication network 10.

The first network information processing apparatus 30 includes a converting means and a transmission means. The converting means converts the network connection configuration of the configuration component concerning the first communication network 10 of the second communication network 20 into the form of the user providing network specialized in the second communication network under a predetermined conversion rule. The transmission means transmits the user providing network to the second network information processing apparatus 40. And the second network information processing apparatus 40 includes a management means which manages the second communication network 20 based on the user providing network.

The first network information processing apparatus 30 converts the network connection configuration of the configuration component concerning the first communication network 10 of the second communication network 20 including at least a part of the first communication network 10 into the form of the user providing network specialized in the second communication network, and provides it. And the second network information processing apparatus 40 can manage the second communication network 20 based on the user providing network.

It becomes possible to manage the network with the cooperation of the first network information processing apparatus 30 and the second network information processing apparatus 40 by configuring in this way. Therefore, it is possible to simplify the configuration of the information processing system of the whole network and also it is possible for the user to carry out the intended network control using the second network information processing apparatus 40.

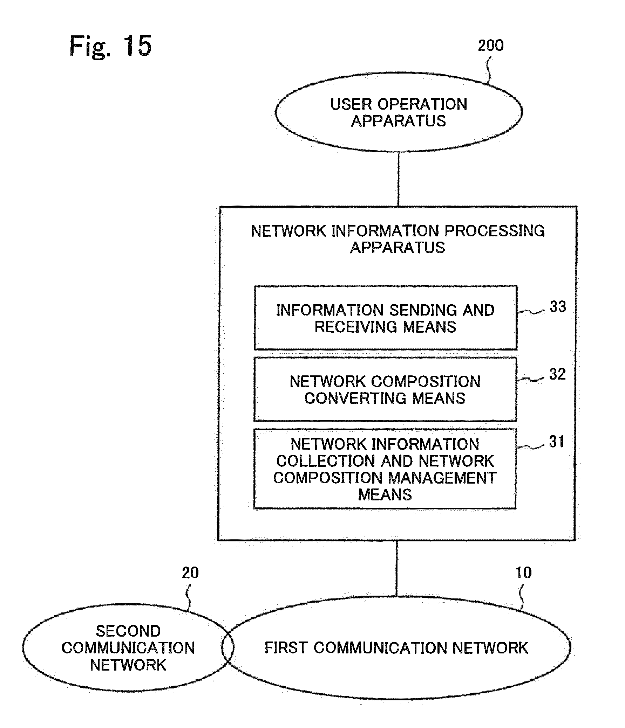

Fig. 15 is a block diagram which shows a network information processing apparatus in the basic embodiment of the present invention.

The network information processing apparatus in the basic embodiment of the present invention includes a network information collection/network configuration management means 31, a network configuration converting means 32 and an information sending and receiving means 33.

The network information collection/network configuration management means 31 acquires and manages the network connection configuration information on the first communication network 10. The network configuration converting means 32 converts the network connection configuration of the configuration component concerning the first communication network 10 managed by the network information collecting/network configuration management means of the second communication network 20 which includes at least a part of the first communication network 10. In other words, the network configuration converting means 32 generates the user providing network in which the configuration component concerning the first communication network 10 in the second communication network 20 is converted into the form specialized in the second communication network 20 following a procedure assembled with a predetermined conversion rule. The information sending and receiving means transmits the user providing network which the network configuration converting means 32 has generated to the user operation apparatus 200 which manages and controls the second communication network. The network information processing apparatus is an apparatus which manages and controls the first communication network 10.

This network information processing apparatus manages and controls the first communication network 10. And this network information processing apparatus generates the user providing network in which the configuration component of configuration component concerning the first communication network 10 of the second communication network 20 which includes at least a part of the first communication network 10. The user providing network is transmitted to the user operation apparatus 200 which manages and controls the second communication network 20.

This network information processing apparatus becomes possible to manage the network with the cooperation of the user operation apparatus 200 by configuring in this way. Therefore, the configuration of the information processing system of the whole network can be simplified and also the user can carry out the intended network control using the user operation apparatus 200.

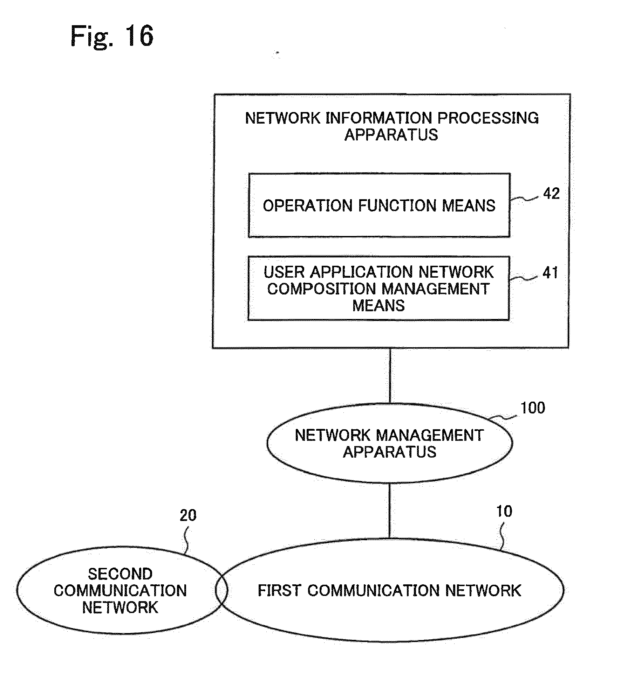

Fig. 16 is a block diagram which shows a different network information processing apparatus in the basic embodiment of the present invention.

In this basic embodiment, the user providing network is generated in which the configuration component concerning the first communication network in the second communication network is converted into the form specialized in the second communication network following a procedure assembled with a predetermined conversion rule. This user providing network is transmitted from a network management apparatus 100 which manages and controls the first communication network to this network information processing apparatus.

This network information processing apparatus is an apparatus that manages and controls the second communication network, and includes the user application network configuration management means 41 and an operation function means 42.

The user application network configuration management means 41 receives the transmission of the user providing network from the network management apparatus 100 and manages the user providing network as the second communication network 20. The operation function means 42 manages and controls the configuration component of the second communication network 20. And the user application network configuration management means 41 makes a network management apparatus 100 control the configuration component corresponding to the first communication network with transmitting the control request corresponding to the control, when the operation function means 42 controls the configuration component of the second communication network 20.

This network information processing apparatus can control a network with the cooperation of the network management apparatus 100 by configuring in this way. Therefore, the configuration of the information processing system of the whole network can be simplified and also the user can carry out the intended network control using this network information processing apparatus.

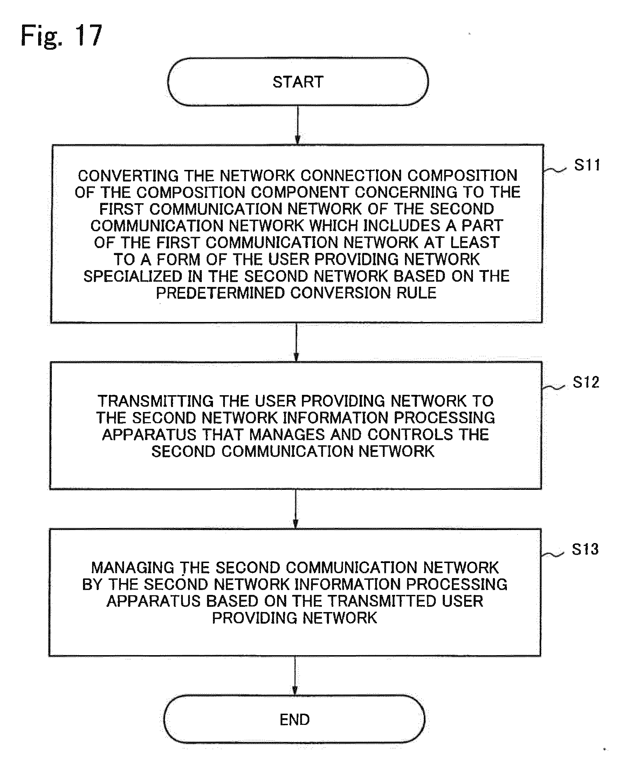

Fig. 17 is a flow chart which shows a network information processing method in the basic embodiment of the present invention.

The network information processing method in the basic embodiment of the present invention includes three steps. The first network information processing apparatus that manages and controls the first communication network carries out the first and second steps, while the second network information processing apparatus that manages and controls the second communication network carries out the third step.

The first step converts the network connection configuration of the configuration component concerning the first communication network of the second communication network including at least a part of the first communication network into the form of the user providing network specialized in the second communication network under a predetermined conversion rule (S11).

The second step transmits the user providing network to the second network information processing apparatus (S12).

In the third step, the second network information processing apparatus manages said second communication network based on said user providing network which has been transmitted (S13).

By configuring in this way, it becomes possible to manage the network with the cooperation of the first network information processing apparatus that manages and controls the first communication network and the second network information processing apparatus that manages and controls the second communication network. Therefore, the configuration of the information processing system of the whole network can be simplified, and also the user can carry out the intended network control using the second network information processing apparatus.

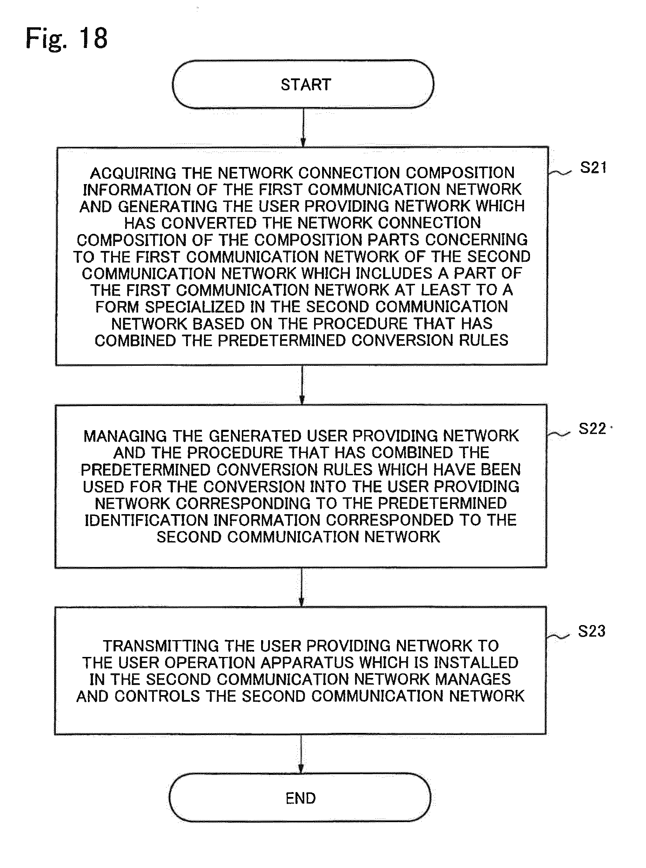

Fig. 18 is a flow chart which shows another network information processing method in the basic embodiment of the present invention.

The other network information processing method in the basic embodiment of the present invention includes three steps, and the network information processing apparatus carries out which manages and controls the first communication network.

The first step acquires the network connection configuration information on the first communication network. And the user providing network is generated in which the network connection configuration of the configuration component, concerning the first communication network, of the second communication network including at least a part of the first communication network is converted into the form specialized in the second communication network according to the procedure assembled with a predetermined conversion rule (S21).

The second step manages the procedure assembled with a predetermined conversion rule used for the conversion to the generated user providing network and the user providing network corresponding to the predetermined identification information which corresponds to the second communication network (S22).

The third step transmits the user providing network to the user operation apparatus which manages and controls the second communication network (S23).

By configuring in this way, the network information processing apparatus which manages and controls the first communication network becomes able to manage the network with the cooperation of the user operation apparatus which manages and controls the second communication network. Therefore, the configuration of the information processing system of the whole network can be simplified, and also the user can carry out the intended network control using the user operation apparatus.

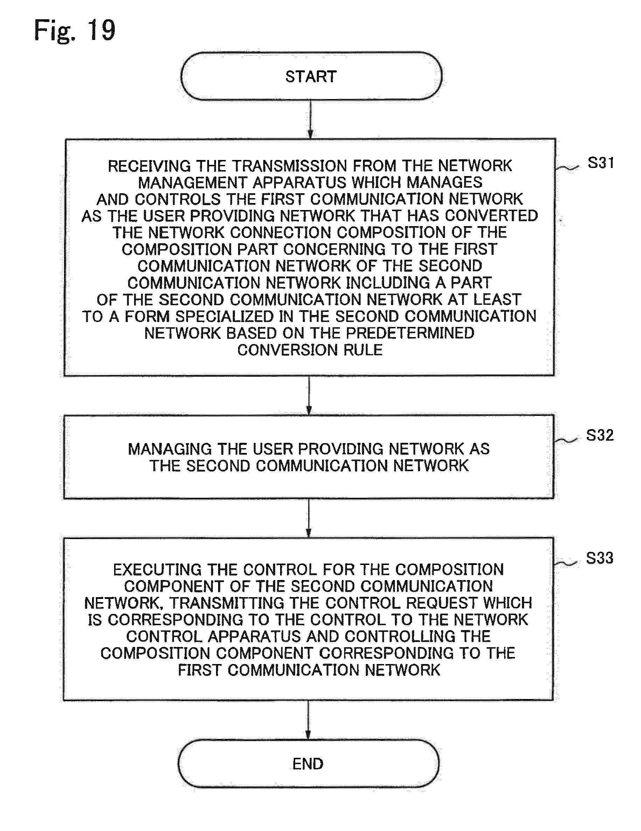

Fig. 19 is a flow chart which shows other network information processing method in the basic embodiment of the present invention.

The other network information processing method in the basic embodiment of the present invention includes three steps, and the network information processing apparatus carries out which manages and control the second communication network including at least a part of the first communication network.

The first step receives transmission of the user providing network from a network management apparatus which manages and controls the first communication network (S31). Further, the user providing network is a network configuration in which the network connection configuration of the configuration component, concerning the first communication network, of the second communication network, is converted to the form specialized in the second communication network under a predetermined conversion rule.

The second step manages the user providing network as the second communication network (S32).

When the control is performed for the configuration component of the second communication network, the third step transmits the control request corresponding to the control for the network management apparatus and controls the configuration component corresponding to the first communication network (S33).

By configuring in this way, the network information processing apparatus which manages and controls the second communication network becomes able to manage the network with the cooperation of the network management apparatus which manages and controls the first communication network. Therefore, the configuration of the information processing system of the whole network can be simplified, and also the user can carry out the intended network control using this network information processing apparatus.

Continuously, the embodiment of the present invention will be described in detail.

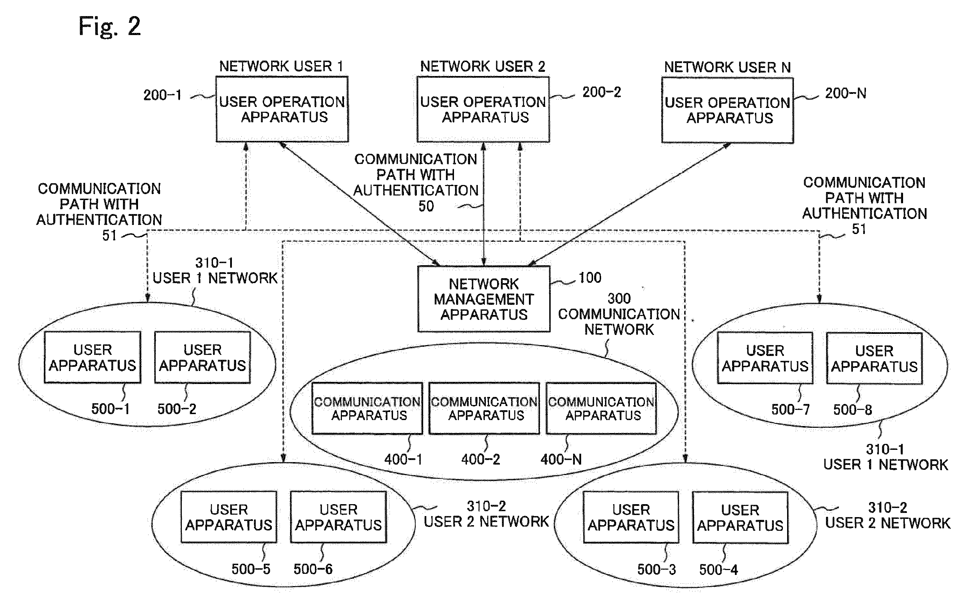

Fig. 2 is a block diagram which shows a network information processing system in the embodiment of the present invention.

A network information processing system in the embodiment of the present invention is configured including a communication network 300 which a communications carrier operates, a plurality of user networks 310-k (k=1, 2... and N), a network management apparatus 100 and the user operation apparatus 200- k.

The communication network 300 includes a plurality of communication apparatus 400-i (i=1, 2... and n), and the user network 310-k includes a plurality of user apparatus 500-j (j=1, 2... and m) interconnected using the communication network 300. The network management apparatus 100, which is the information processing apparatus in the side of the communication network 300, manages the configuration information on the communication network 300 and controls the configuration component. And the user operation apparatus 200-k, which is the information processing apparatus in the side of the user network, is installed corresponding to the respective user network 310-k, manages and controls the respective user network 310-k.

In other words, each user forms the respective user network 310-k including at least a part of the communication network 300 using the communication network 300 of the communications carrier, and installs the user operation apparatus 200-k as the apparatus which manages and controls its own user network 310-k.

The network management apparatus 100 is connected with each communication apparatus 400-i which configures the communication network 300 by a communication path (not shown) and collects the configuration information and the obstacle information on each communication apparatus 400-i. The network management apparatus 100 is connected with each user operation apparatus 200-k in a communication path 50 with authentication.

Each user operation apparatus 200-k is connected with the user apparatus 500-j in the corresponding respective user network 310-k by a communication path 51 with authentication.

Further, when it is not necessary to distinguish and describe the individuals, the user operation apparatus 200-k, the user network 310-k, the communication apparatus 400-i and user apparatus 500-j will be described hereafter as a user operation apparatus 200, a user network 310, a communication apparatus 400 and a user apparatus 500.

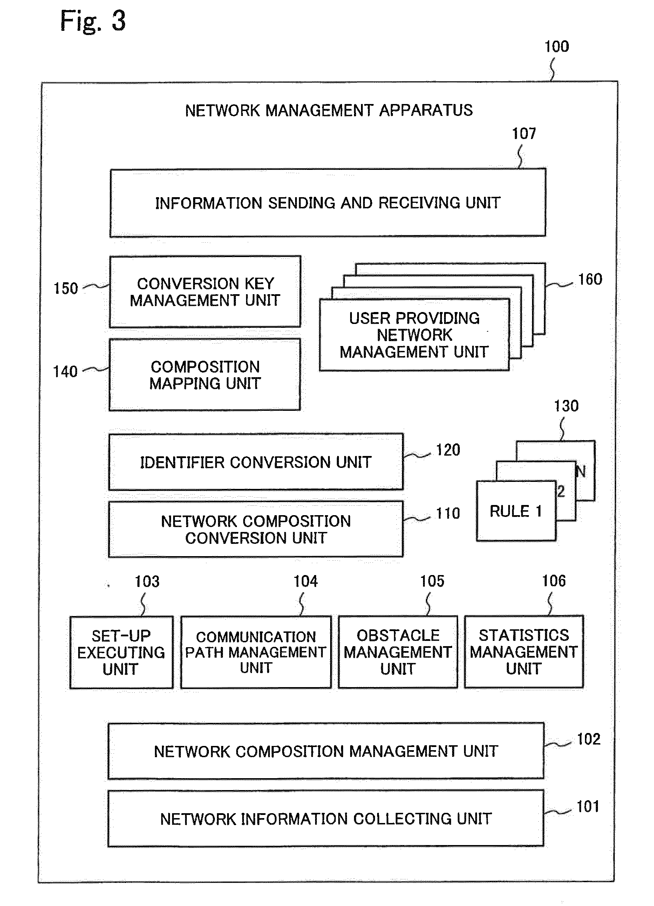

The configuration of the network management apparatus 100 which manages and controls the communication network 300 will be described referring to Fig. 3.

Fig. 3 is a block diagram which shows the configuration of the network management apparatus in the embodiment of the present invention.

The network management apparatus 100 can be divided into three functions. The first function is the function to manage and control the communication network 300, and the second function is the function to exchange the information to the user operation apparatus 200. The third function is the function to process the communication network 300 that it manages in order to exchange the information to the user operation apparatus 200. In other words, by corresponding to each means in the basic embodiment mentioned above, the first function corresponds to the network information collection/network configuration management means 31 in the basic embodiment, the second function corresponds to an information sending and receiving means 33 likewise, and the third function corresponds to a network configuration converting means 32.

As the first function, the network management apparatus 100 includes a network information collecting unit 101, a network configuration management unit 102, a set-up executing unit 103, a communication path management unit 104, an obstacle management unit 105 and a statistics management unit 106.

The network information collecting unit 101 acquires the configuration information such as the connecting relation of the communication apparatus 400 and the vacant information on the link bandwidth between the communication apparatus and the obstacle/statistics information from the communication apparatus 400. The network configuration management unit 102 manages the information which the network information collecting unit 101 collects as the configuration information and status information on the communication network 300. A set-up executing unit 103 sets the configuration concerning the communication apparatus 400 and the configuration concerning the communication paths that communication apparatus 400 accommodates, and a communication path management unit 104 manages the circuits that the set-up executing unit 103 has set up. The obstacle management unit 105 manages the information such as classification, an occurrence location and the importance of the obstacles which have occurred in the communication network 300. A statistics management unit 106 manages the statistics information such as the traffic information and the quality information on the communication paths.

As the second function, the network management apparatus 100 includes a user providing network management unit 160, a conversion key management unit 150, a configuration mapping unit 140 and an information sending and receiving unit 107.

The user providing network administrative unit 160 manages the network configuration of each user providing network per user. Further, a user providing network indicates the network configuration of the communication network 300 corresponding to each user network 310 which has been converted according to the conversion rule mentioned later. A conversion key management unit 150 manages a procedure (conversion key) of the conversion from the network configuration of the communication network 300 to the configuration of each user providing network. In other words, corresponding to the user network 310, it manages the conversion rule and the conversion procedure at the conversion to the user providing network corresponding to each user network 310.

The configuration mapping unit 140 performs an inverse conversion for the control request, which is transmitted from the user operation apparatus 200, to the user providing network into the configuration of communication network 300. In other words, as mentioned later, the user operation apparatus 200 manages and controls its own user network 310 based on the user providing network transmitted from the network management apparatus 100. Therefore, the control information transmitted to a network from the user operation apparatus 200 is information based on the user providing network. The configuration mapping unit 140 performs the inverse conversion for the control request to this user providing network into the configuration of the communication network 300, and makes enable to control the configuration component of the communication network 300.

The configuration mapping unit 140 performs a conversion (order conversion) for transmitting the event, which has occurred in the communication network 300 after transmitting the user providing network to each user, to each user operation apparatus 200. In other words, it converts the occurring event information on the communication network 300 to the occurring event information in the user providing network and transmits to each user operation apparatus 200.

And an information sending and receiving unit 107 exchanges the information to the user operation apparatus 200.

As the third function, the network management apparatus 100 includes a network configuration conversion unit 110, an identifier conversion unit 120 and the rule unit 130.

The network configuration conversion unit 110 applies the conversion rule to the collected network configuration information on the communication network 300, and converts to the information on the network configuration (user providing network) that is provided to each user. An identifier conversion unit 120 converts an identifier (identifier such as IP address and the apparatus name) of the communication apparatus and communication links which specify the network configuration for each user providing network according to the conversion rule. And the rule unit 130 manages a list of conversion rules used in a network configuration and the conversion of the identifier.

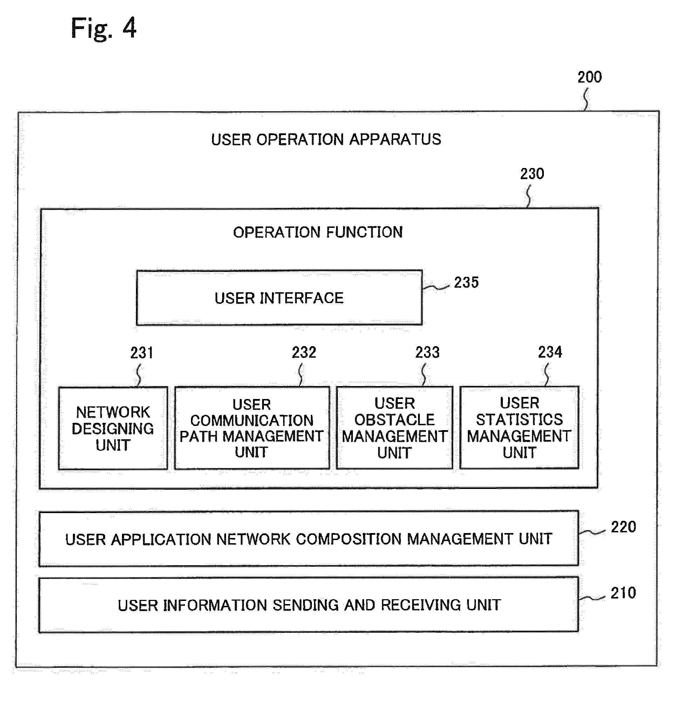

Next, the configuration of the user operation apparatus 200 which manages and controls the user network 310 will be described with reference to Fig. 4.

Fig. 4 is a block diagram which shows the configuration of the user operation apparatus in the embodiment of the present invention.

The user operation apparatus 200 is an information processing apparatus, in the side of the user network, which manages its own network based on the user providing network corresponding to the user network that is provided from the network management apparatus 100 and requests for the network management apparatus 100 as necessary.

The user operation apparatus 200 includes a user information sending and receiving unit 210, the user application network configuration management unit 220 and the operation function 230. In other words, when it makes them correspond to each means in the basic embodiment mentioned above, the user information sending and receiving unit 210 and the user application network configuration management unit 220 correspond to the user application network configuration management means 41, and the operation function 230 corresponds to an operation function means 42.

The user information sending and receiving unit 210 exchanges the information to the network management apparatus 100. The user application network configuration management unit 220 manages the user providing network which is provided from the network management apparatus 100 as a user application network. The operation function 230 controls a communication path as the user network 310 using the user application network configuration which the user application network configuration management unit 220 manages. Further, the network information after the conversion in the network management apparatus 100 is called a user providing network, and the user providing network managed in the user operation apparatus 200 is called a user application network.

The operation function 230 is the function to interface with an operator of the user network 310 and includes a network designing unit 231, a user communication path management unit 232, a user obstacle management unit 233, a user statistics management unit 234 and a user interface 235. A network designing unit 231 designs the route and the bandwidth of the communication path in the user application network. The user communication path management unit 232 manages the communication path of a determined user application network. The user obstacle management unit 233 manages obstacle information on the user application network, and the user statistics management unit 234 manages the statistics information on the user application network. The user interface 235 provides a control screen when an operator of the user network 310 carries out each control mentioned above.

Thus, when a certain user forms his user network 310 using the communication network 300 of the communications carrier, the network management apparatus 100 discloses the network configuration information on the communication network 300 specialized in the user as the user providing network. In other words, as a configuration specialized in the user network 310 including at least a part of the communication network 300, the communication network 300 is disclosed as a user providing network. And by managing and controlling the disclosed user providing network as the user application network, the user can manage and control its own user network 310 under the condition equivalent to the communication network 300.

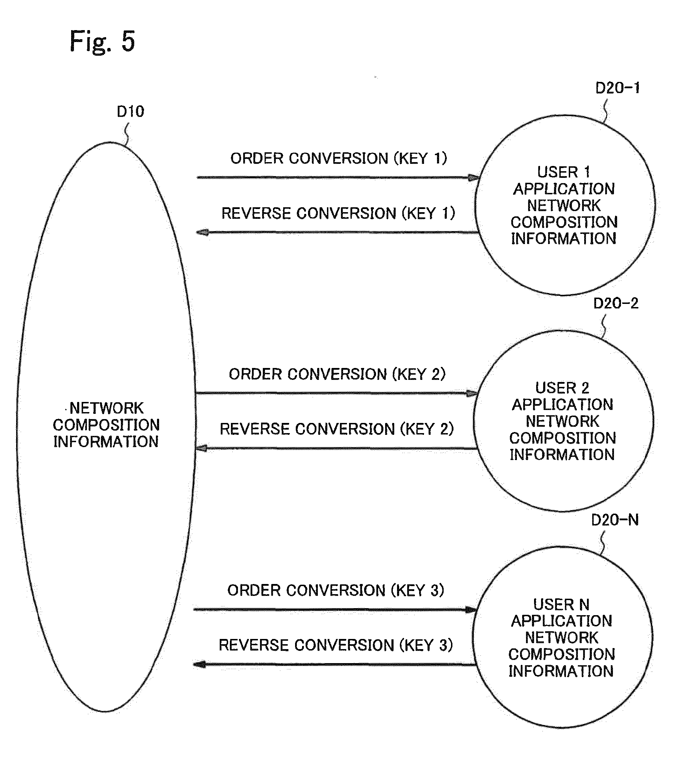

Fig. 5 is a figure which shows a conversion concept of the network configuration information in the embodiment of the present invention.

The network configuration information on a communication network 300 which the network management apparatus 100 manages and the configuration information on the user application network (the user providing network) provided for each user operation apparatus 200 has the relation as shown in Fig. 5.

In the network information processing system of the embodiment of the present invention, network configuration information (D10) of a communication network 300 is disclosed to each user as the user application network (the user providing network) in the relation with each user network 310 connected to this communication network 300.

In other words, because a communication apparatus and a communication path which are being used are different in a communication network 300 for each user network 310, as the user application network (the user providing network), network configuration information specialized in the user network 310 is provided for the user network 310.

For example, the network management apparatus 100 provides the user 1 application network configuration information (D 20-1) to a user operation apparatus 200-1 and provides the user 2 application network configuration information (D 20-2) to a user operation apparatus 200-2. And the user N application network configuration information (D20-N) is provided to the user operation apparatus 200-N.

Corresponding to each user network 310-k, the conversion key mentioned after is used for the conversion with the network configuration information (D10) of the communication network 300 and each user k application network configuration information (D20-k), and the respective network configurations is constructed so that the 1 to 1 conversion (order conversion and inverse conversion) may become possible.

In other words, the control processing carried out in the user application network of the user can be mapped in 1 to 1 to the communication network 300 by designating the conversion key corresponding to a certain user. It is possible to notify the event information such as the obstacle information and the statistics information occurring in the communication 300 corresponding in 1 to 1 manner on the user interface of the user by designating a conversion key corresponding to a certain user.

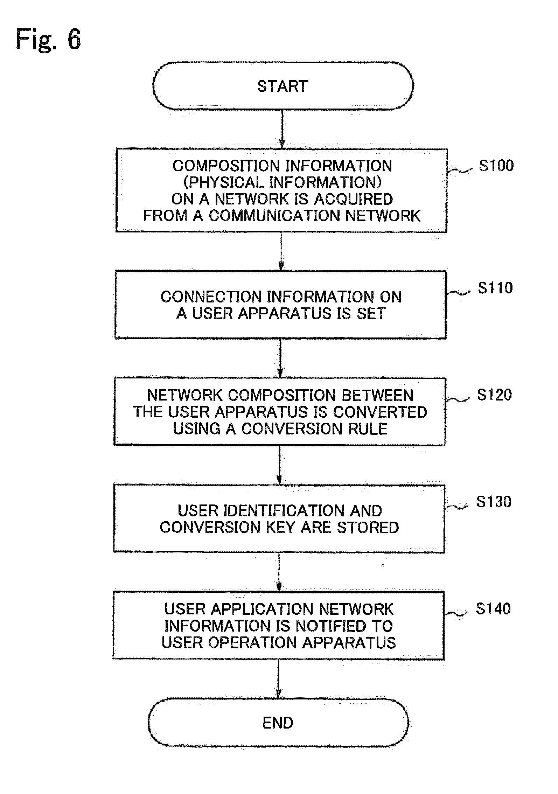

Next, the whole operation of the network information processing system of the embodiment of the present invention will be described with reference to Figs. 6 to 13.

Main operation of this embodiment can be divided into the following three. The first operation is the operation to convert the network configuration information on the communication network 300 corresponding to the user network 310 to the user application network. The second operation is the operation to reflect the control whose object is the user application network to the communication network 300 in the user operation apparatus 200. And the third operation is the operation to notify the user application network of the event which has occurred in the communication network 300.

First, using Fig. 3 and Fig. 6, the operation that is the first operation will be described which converts the network configuration information on the communication network 300 corresponding to the user network 310 into the user application network.

Fig. 6 is a flow chart which shows a conversion procedure of the network configuration information in the embodiment of the present invention.

The network management apparatus 100 collects the information from all communication apparatus as 400-1-n which configure the communication network 300 using the network information collecting unit 101 and creates the network configuration information on the communication network 300. The created network configuration information is stored in the network configuration management unit 102 (S 100). Here, the network configuration information includes the information which is generally necessary for the network management such as the location where a communication apparatus is installed, the connection relation between the communication apparatus, the kind of the physical interfaces, the connection relationships between the communication apparatus, the communication link bandwidth and its unused bandwidth, the distance and the cost of the communications links.

The network configuration management unit 102 which possesses the function to detect the difference of the information, can judge only the changing portions by comparing the information collected periodically and the information stored in the network configuration management unit 102. As a result, the network configuration information on the communication network 300 is always updated in the latest state.

Next, in order to specify the configuration of the respective user networks 310, the network configuration management unit 102 sets the information on the connection relationship between each user apparatus 500 and each communication apparatus 400 to the network configuration management unit 102 (S110). Therefore, the information is inputted in advance that indicates which user network 310 has the user apparatus that each user apparatus 500 belongs to. And the information on the connection relationship can be created by identifying which user network 310 the user apparatus 500 that each communication apparatus 400 accommodates belongs to.

When the information on the connection relationship between each user apparatus 500 and each communication apparatus 400 is set up, the network configuration conversion unit 110 and the identifier conversion unit 120 convert the network configuration of the communication network 300 between the user apparatus belonging to the user network 310 into the user providing network using a plurality of conversion rules for each user network 310. And the user providing network is managed in correspondence with a user ID identifies the user network 310 in the user providing network management unit 160 (S120). At this time, the conversion procedure used for the conversion is managed as a conversion key, in a conversion key management unit 150 with the user ID which identifies the user network 310 (S130). Finally, the converted user providing network information is notified to the user operation apparatus 200 of the corresponding user network 310 (S140).

The network configuration conversion procedure described above is applied to all users network 310 which use the communication network 300.

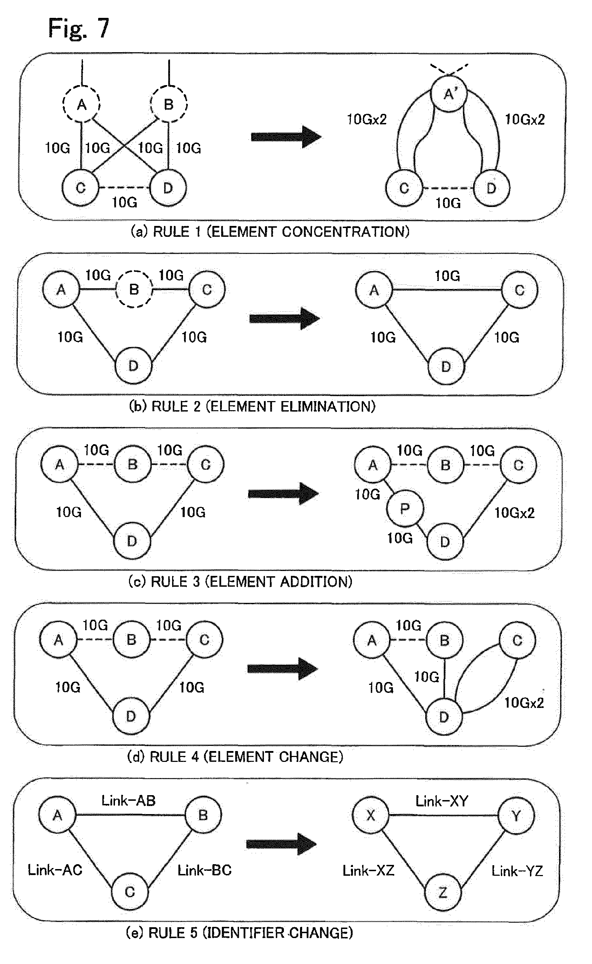

Next, the conversion from the network configuration information on the communication network 300 to the user providing network will be described in detail with reference to Fig. 7, Fig. 8 and Fig. 9.

Fig. 7 is a figure which shows a conversion concept of the network configuration information in the embodiment of the present invention.

The network configuration information in the embodiment of the present invention has a network connection configuration with a graph structure in which the connection relationship of the element that means the communication link between the communication apparatus or the communication apparatus has been graphically expressed.

Figs. 7 (a)-(e) illustrates a conversion rule which the network configuration conversion unit 110 and the identifier conversion unit 120 of the network management apparatus 100 use when converting the network configuration information.

The five rules (element concentration, element elimination, element addition, element change and identifier change) will be described with reference to Figs. 7 (a)-(e).

Fig. 7 (a) is an element concentration rule and is a procedure which concentrates no smaller than two of communication equipment or communications links into one. Here, the case indicated that communication apparatus A' is created by concentrating communication apparatus A and communication apparatus B. At this time, the connection of communications links is changed with the concentration. In other words, the communications link 10G connected to the communication apparatus A and the communication apparatus B respectively from the communication apparatus C before the concentration is changed to the form in which two communications links 10G are connected to the communication apparatus A' from communication apparatus C after the concentration. It is the same in the relation between the communication apparatus D and the communication apparatus A, the communication apparatus B. However, the information accompanying the link of the bandwidth information and the cost information is maintained in this change. There is no special restriction in the network configuration to which this rule is applied.

Fig. 7 (b) is an element elimination rule and is a procedure which eliminates an unnecessary communication apparatus. In this example, the communication apparatus B is eliminated and indicates the case that the communication apparatus A and the communication apparatus C are directly connected. At this time, the new communications link created with the elimination adopts the small bandwidth of the communication link before the conversion in terms of the unused bandwidth, and has the sum of the cost information on two communications links before the conversion in terms with the cost information (distance, delay, metric and the like) on a communications link as accompanying information The configuration to which this rule is applied has premised the case that the user apparatus is not connected to the communication apparatus to be eliminated.

Fig. 7 (c) is an element additional rule, and a procedure in which the communication apparatus which does not exist in actual is added. Here, the case is indicated that a communication apparatus P is newly added between the communication apparatus A-D. At this time, the two new communications links divided with the addition have the same value as the communications link before the conversion in terms with the unused bandwidth and the value (the sum is the link cost before the conversion) which is the divided value of original link cost in terms with the cost as accompanying information. There is no special restriction in the configuration to which this rule is applied.

Fig. 7 (d) is an element conversion rule and is a procedure which changes the connection configuration of the communications link. Here, a changed example is indicated so that a communications link which connected communication apparatus B-C may be connected via communication apparatus D. At that time, space band information on two new communications links which connect communication apparatus C and communication apparatus D is set like an element additional rule so that the summation of the cost of two same new communications links as a communications link before a conversion may become same as a communications link before a conversion. There is no special restriction in a configuration to which this rule is applied.

Fig. 7 (e) is an identifier conversion rule and is a procedure which converts an identifier that uniquely specifies the communication apparatus and the communications link from a view point of the security such as the DOS (Denial of Service and service refusal) attack prevention. Here, the case is indicated that names of the communication apparatus A, B and C and the name of the communications link are changed. The change of identifiers in not limited for the name, but it is possible to change IP address and the location information, for example. There is no special restriction in the configuration to which this rule is applied.

Further, the unused bandwidth information on the communications link described by the rule mentioned above is the important information for a communications carrier, and the disclosing for other communications carriers may not be desired. Although it has been explained in the above description that the unused bandwidth information on a converted communication link has the same value as the communications link as before the conversion, it is possible to set the smaller value than the value before the conversion if the concealing is desired.

Next, an example which converts the network configuration information on the communication network 300 in the network configuration information on the user providing network will be described using the five conversion rules mentioned above.

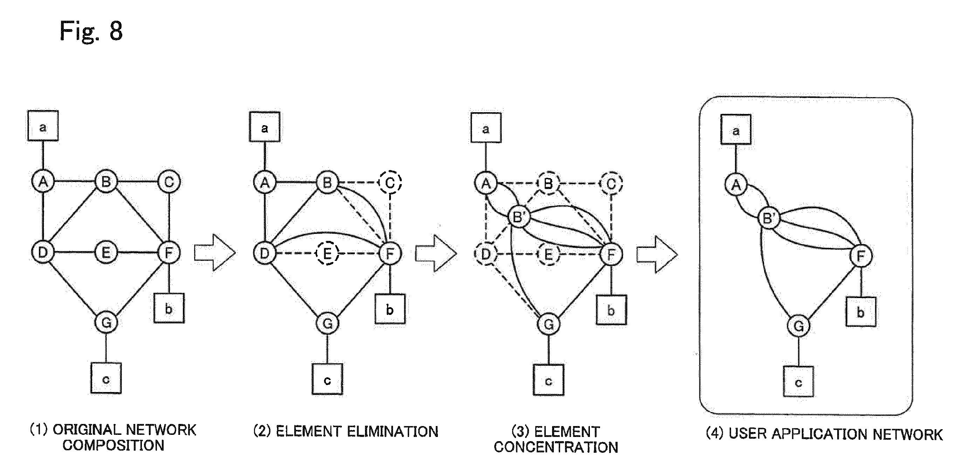

Fig. 8 is a block diagram which shows a conversion example of the network configuration information in the embodiment of the present invention.

Fig. 8 (1) illustrates the network configuration of the communication network 300 concerning a certain user network. a-c is user apparatus, and A-G is communication apparatus of the communication network 300. In other words, in this user network, the user apparatus a is accommodated in the communication apparatus A, the user apparatus b accommodated in the communication apparatus F, and the user apparatus c is accommodated in the communication apparatus G, respectively.

A conversion example shown in Fig. 8 illustrates the case that the configuration change is performed in order of the element elimination and the element concentration.

First, because a user apparatus is not connected to the communication apparatus C and E, it is possible to apply the element elimination rule when it is considered to apply the element elimination. And then, in the case that element elimination rule is applied to both of the communication apparatus C and E, it becomes the network configuration as shown in Fig. 8 (2).

Next, for the network configuration in which the element has been eliminated, it becomes the network configuration shown in Fig. 8(3) when it is considered to apply the element concentration to the communication apparatus B and D. Here, the communication apparatus which performs the element concentration may be selected randomly.

By carrying out the above-mentioned conversion procedure, the configuration of the user providing network (the user application network) provided for the user operation apparatus 200 of this user network has a configuration shown in Fig. 8 (4). In other words, the user providing network has the graph structure, the visualization of the whole of the its own user network becomes possible in the communication network 300 as the user application network at the user side, and it becomes easily enabled to grasp the unused bandwidth information, obstacle information and the statistical event information.

Thus, the user can grasp the configuration of the communication network 300 concerning its own user network as the network configuration of the user application network on the user interface of the user operation apparatus 200 in the network information processing system of the embodiment of the present invention. Therefore, when the user itself determines the route concerning its own user network, it becomes possible to judge which point shall be passed so that the route may be the best on a basis of the network configuration of the user application network. Because this means to judge the configuration of the communication network 300 under the equivalent condition, the user can performs the routing control which the user intends in even if it is the communication network 300 of the communications carrier. From the similar view point, in the case that the communication path which connects a plurality of bases is set and the case that a obstacle occurs, it becomes possible to optimize the communication network 300 of the communications carrier by user itself.

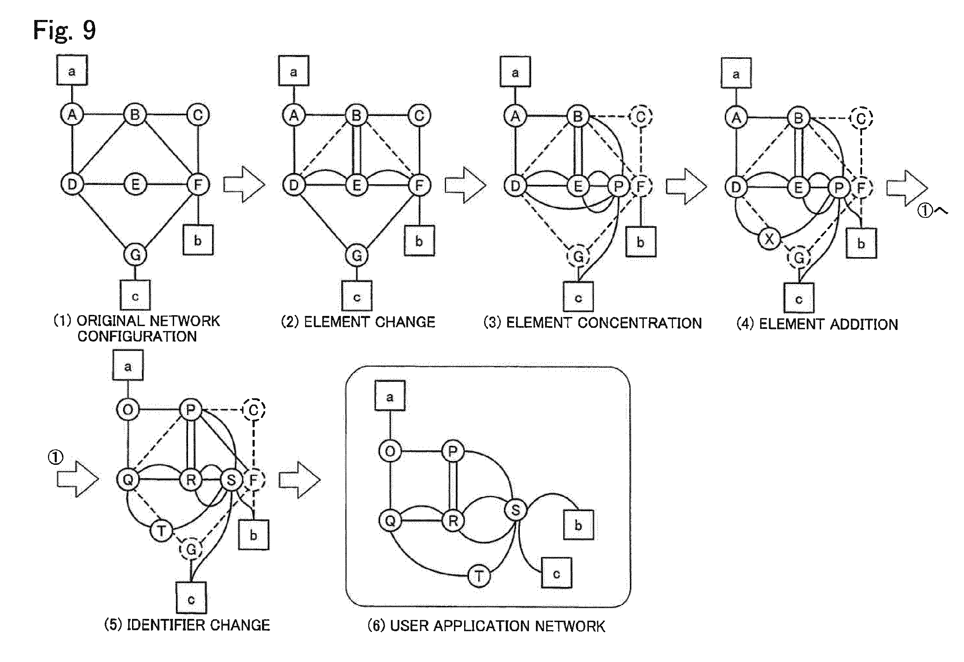

Another example of the conversion of network configuration information will be described with reference to Fig. 9.

Fig. 9 is a block diagram which shows another conversion example of the network configuration information in the embodiment of the present invention and is the example that the different conversion process is applied to the network configuration which is the same as Fig. 8.

Fig. 9 shows an example that the network configuration (1) of the communication network 300 concerning a certain user network is converted to the network configuration (2) in which the element has been changed, this is converted to the network configuration (3) in which the element has been concentrated, and the configuration conversions for the element addition (4) and the identifier change (5) has been performed in this order. Finally, the configuration of the user providing network (user application network) which is provided to the user operation apparatus 200 becomes as shown in Fig. 9 (6).

It is clear as shown in Fig. 8 and Fig. 9 that the configuration of the user providing network (user application network) which is finally provided becomes the different form when the applied conversion rule, its applying order or the applied element is different even if the network configuration of the original communication network 300 is the same.

Accordingly, by using the characteristics, even if the network information is provided for the user, a communications carrier can conceal the details of his network information. This can sweep out a security issue worried in such cooperative network operation. By loading a transformation algorithm which maximally simplifies the user providing network (user application network) which is provided for the user, it also becomes possible to conceal the complexity of the large scale communication network to the user.

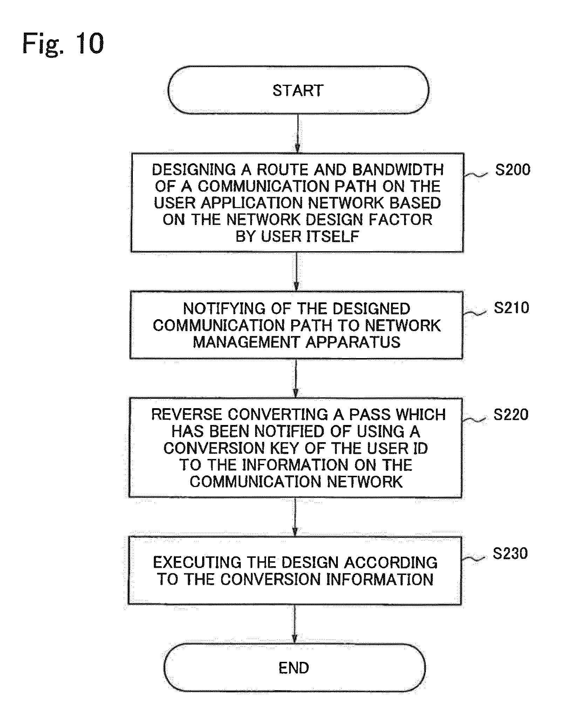

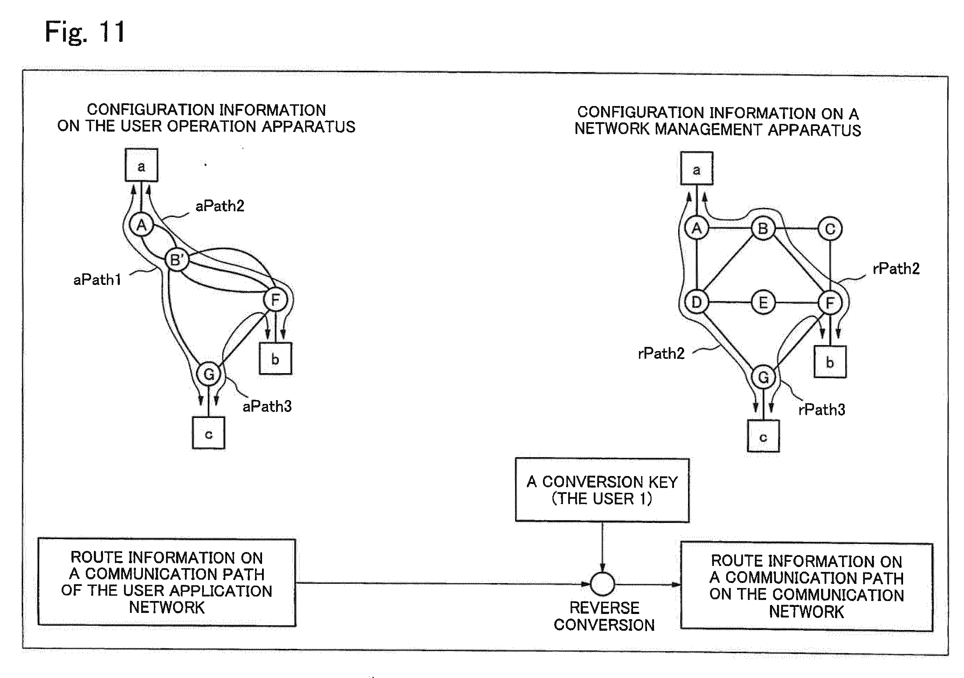

Next, the operation, which is the second operation that reflects the control whose target is the user application network in the user operation apparatus 200 will be described using Fig. 10 and Fig. 11 with reference to Fig. 4

Fig. 10 is a flow chart which shows a control protocol using the user operation apparatus in the embodiment of the present invention.

Fig. 11 is a block diagram which shows a control protocol using the user operation apparatus in the embodiment of the present invention.

First, a user designs a route and a bandwidth of a communication path on the user application network based on the network designing conditions of the user itself. (S200). The route and the bandwidth of the communication path are designed by a network designing unit 231 of the user operation apparatus 200. At this time, the user operation apparatus 200 is controlled based on the configuration information indicated on the left side of Fig. 11.

Next, the user operation apparatus 200 notifies the network management apparatus 100 of the information on the communication path designed on the user application network (S210).

The network management apparatus 100 which has received the notification, identifies the user ID from the user providing network, and picks up the user providing network and the conversion key corresponding to the user ID which is identified from the user providing network management unit 160 and the conversion key management unit 150. And the configuration mapping unit 140 performs the inverse conversion (S220) using the inverse conversion key corresponding to the user providing network. By this inverse conversion, the information on the user communication path on the user application network is converted to the information on the communication path on the communication network 300. In other words, it is converted to the configuration information indicated on the right side of Fig. 11.

In the network management apparatus 100, the communication apparatus 400-i where the set-up executing unit 103 is relevant is set up according to information on a communication path on this communication network 300 (S230). As a result, the control performed on the user application network using the user operation apparatus 200 has been reflected to the configuration component which corresponds to the communication network 300 by the network management apparatus 100.

In other words, the user communication path on the user application network shown in Fig. 11 is mapped as the communication path on the communication network 300, and the communication path on the communication network 300 is controlled according to the process which the user has designed by itself. As mentioned above, the network design information (aPath1, aPath2 and aPath3) which a user has designed will be dealt with as the network design information (rPath1, rPath2 and rPath3) on the communication network 300 by the execution of the procedure of the inverse conversion.

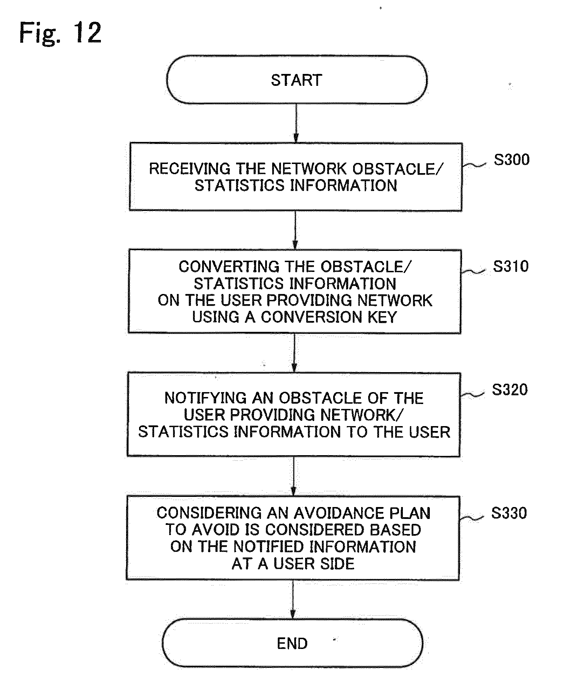

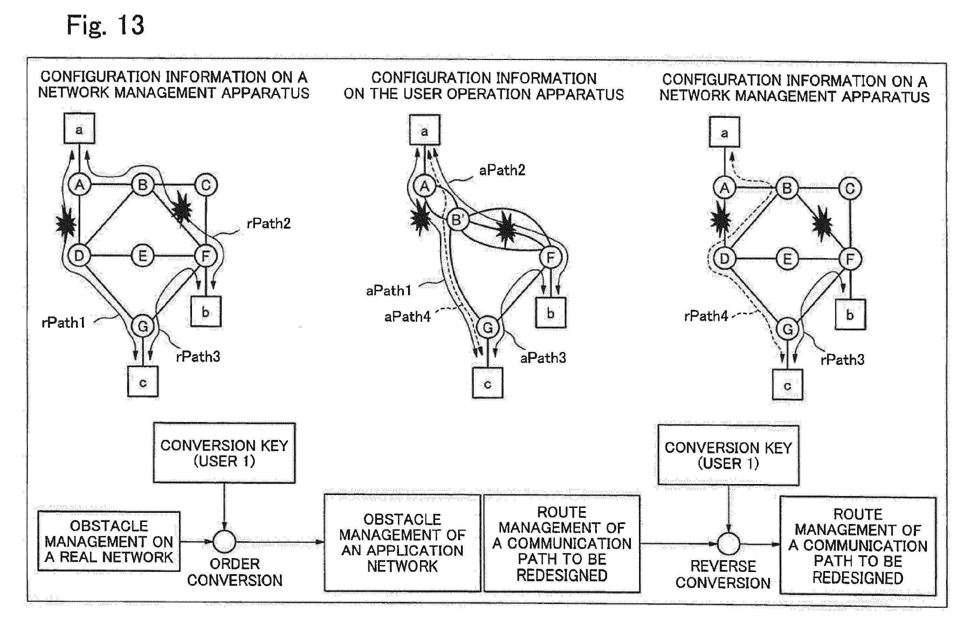

Next, the operation, which is the third operation that notifies the user application network of the event which has occurred in the communication network 300, will be described using Fig. 12 and Fig. 13 with reference to Fig. 3.

Fig. 12 is a flow chart which shows an event notification procedure from a network management apparatus in the embodiment of the present invention.

Fig. 13 is a block diagram which shows an event notification procedure from a network management apparatus in the embodiment of the present invention.

First, a network management apparatus 100 acquires the obstacle information and the statistics information on the communication network 300 via a network information collecting unit 101 (S300). A left figure of Fig. 13 indicates the obstacle occurrence situation in the communication network 300.

The acquired obstacle information and statistics information is converted using the conversion key which corresponds to each user ID by the configuration mapping unit 140, and is converted and managed as the obstacle/statics information corresponding to each user providing network (S310). Here, when is the obstacle information and statistics information which offers no influence to the user communication path with reference to the communication path management unit 104, it is not converted for the relevant users.

When the conversion over the user providing network is completed, the obstacle/statics information on the user providing network is notified to the user operation apparatus 200 of the relevant user (S320).

Because the user operation apparatus 200 indicates the obstacle/statics information which has been notified on the user application network, the user considers the avoidance scheme based on the information (S330). The central figure of Fig. 13 indicates the obstacle occurrence situation in the communication network 300, the obstacle occurrence situation on the user application network and its countermeasure.

As mentioned above, the event which has occurred on the communication network 300 is notified, after being mapped on the user providing network (the user application network) using the conversion key. As a result, the user can grasp an event which has occurred on the communication network 300.

In other words, as shown in Fig. 13, the situation of the communication path (rPath1 and rPath2) affected by the obstacle of the communication network 300 can be grasped at a user side as the obstacle of the communication path (aPath1 and aPath2) on the user application network. And as the countermeasure of this obstacle, the bypass route aPath4 is set, and the countermeasure can be considered that the communication between user apparatus a-b relays through the user apparatus c. This countermeasure is transmitted from the user operation apparatus 200 to the network management apparatus 100 and reflected to the communication network 300 quickly (the right figure of Fig. 13).

As it has been described above, the network information processing system of the embodiment of the present invention converts the configuration information on the communication network which the communications carrier manages into the form of the user providing network and provides it for the user. And the user providing network has the graph structure, and is able to visualize the network as the user application network at a user side, and the unused bandwidth information the obstacle information and the statistical event information can be grasped easily. As a result, the user can perform the network control which the user has intended using the communication network which the communications carrier manages. Moreover, the user can perform the quick response to the obstacle/statistics event of the communication network by itself. Therefore, the simplified control system has been built for all networks including the user network and the communication network, and it has become possible to make the network stable.

Further, according to the embodiment of the present invention, while it has been explained that the network configuration is converted using the five conversion rules, it is possible to apply the other conversion rule in the embodiment of the present invention as far as the user application network and the communication network correspond with 1 to 1 manner using the conversion key.

In this embodiment, although the user operation apparatus 200 and the network management apparatus 100 have been described as different communication apparatus, the present invention is not limited to this. For example, the network management apparatus 100 provides the function of the user operation apparatus 200 as SaaS (Software as a Service) service, and the user may use it using a web browser. Further, SaaS is the software distribution system that only the part needed for a user out of the software functions has been distributed as a service so that the user can use it. The user uses the function of the software which operates on the server in an on-line way via a network.

Although the present invention has been described with reference to the embodiment above, the present invention is not limited to the embodiment mentioned above. The configuration and the details of the present invention can be changed in the various ways that a person skilled in the art can understand in a scope of the present invention.

This application is based upon and claims the benefit of priority from Japanese Patent Application No. 2020-179948 filed on August 11, 2010, the disclosure of which is incorporated herein in its entirety by reference.

A part or all of the embodiments mentioned above can be expressed as follows.
(Supplementary note 1) A network information processing system including: a first network information processing apparatus that manages and controls a first communication network; and a second network information processing apparatus which manages and controls the second communication network that includes at least a part of the first communication network, wherein the first network information processing apparatus includes: a converting means, which converts a network connection configuration of a configuration component concerning the first communication network of the second communication network into a form of a user providing network specialized in the second communication network under a predetermined conversion rule; and a transmitting means which transmits the user providing network to the second network information processing apparatus, and the second network information processing apparatus includes a management means which manages the second communication network based on the user providing network.
(Supplementary note 2) The network information processing system according to supplementary note 1, characterized in that the converting means of the first network information processing apparatus converts the network connection configuration of the configuration component concerning the first communication network of the second communication network collected from the first communication network into the form of the user providing network according to a procedure which combines predetermined conversion rules, and memorizes the user providing network corresponding to a predetermined identification information which corresponds to the procedure which has combined the predetermined conversion rules and the second communication network.
(Supplementary note 3) The network information processing system according to supplementary note 2 characterized in that when an occurrence event information concerning the first communication network is acquired, the converting means of the first network information processing apparatus converts the occurrence event information into the occurrence event information corresponding to the user providing network based on the procedure which has combined the predetermined conversion rule and the user providing network corresponding to the second communication network that becomes a notification destination of the occurrence event information, and the transmitting means transmits the occurrence event information corresponding to the user providing network to the second network information processing apparatus.
(Supplementary note 4) The network information processing system according to supplementary note 2 or 3 characterized in that the management means of the second network information processing apparatus transmits the control information which controls the second communication network based on the network connection configuration shown in the user providing network to the first network information processing apparatus, the first network information processing apparatus which includes: an inverse converting means that inversely converts the user providing network which memories corresponding to the predetermined identification information which corresponds to the second network information processing apparatus to the network connection configuration of the first communication network based on the procedure which combines the predetermined conversion rule when the control information which controls the second communication network has been transmitted from the second network information processing apparatus; and a setting execution means which applies the control based on the transmitted control information corresponding to the first communication network which has been inversely converted.
(Supplementary note 5) The network information processing system according to one of supplementary notes 1 to 4 characterized in that the user providing network is a network connection configuration having a graph structure in which a connection relationship of a configuration component of a network has been schematically expressed, the conversion rule is a rule which uses any one of element concentration which concentrates configuration components of no smaller than two networks in one, element elimination which eliminates a configuration component of an unnecessary network, element addition to which a configuration component of a network which does not exist really is added, element change which changes the connection configuration of the configuration component of a network and identifier change which converts an identifier which specifies a configuration component of a network uniquely.
(Supplementary note 6) A network information processing apparatus including: a network information collection/network configuration management means which acquires and manages network connection configuration information on a first communication network; a network configuration converting means which generates a user providing network which has converted a network connection configuration of a configuration component concerning the first communication network, which the network information collection/network configuration management means of the second communication network including at least a part of the first communication network manages, into a form specialized in the second communication network according to a procedure that has combined predetermined conversion rules; and an information sending and receiving means which transmits the user providing network that the network configuration converting means has generated to a user operation apparatus which manages and controls the second communication network, wherein the first communication network is managed and controlled.
(Supplementary note 7) The network information processing apparatus according to supplementary note 6 characterized by further including: a user providing network management means which manages the user providing network that the network configuration converting means has generated corresponding to a predetermined identification information corresponding to the second communication network; a conversion key management means which manages a procedure that has combined the predetermined conversion rules the network configuration converting means has used for the conversion to the user providing network; a configuration mapping means which inversely converts to the configuration of the first communication network in reference with a procedure that has combined the predetermined conversion rule used for the conversion of the user providing network and the corresponded user providing network from the user providing network management means and the conversion key management means based on the predetermined identification information corresponding to the user operation apparatus when the control request for the user providing network is transmitted from the user operation apparatus via the information sending and receiving means; and a setting execution means which executes the control request which has been transmitted from the user operation apparatus based on the configuration of the first communication network that the configuration mapping means has converted for a component of the first communication network.
(Supplementary note 8) The network information processing apparatus according to supplementary note 6 or 7 characterized in that the user providing network is a network connection configuration having a graph structure to which a connection relationship of a component of a network has been schematically expressed, and the conversion rule is a rule which uses any one of element concentration which concentrates configuration components of no smaller than two networks in one, element elimination which eliminates a configuration component of an unnecessary network, element addition to which a configuration component of a network which does not exist really is added, element change which changes the connection configuration of the configuration component of a network and identifier change which converts an identifier which specifies a configuration component of a network uniquely.
(Supplementary note 9) A network information processing apparatus which manages and controls the second communication network including: a user application network configuration converting means which receives the transmission from a network management apparatus which manages and controls a first communication network as a user providing network which has converted a network connection configuration of a configuration component concerning the first communication network in the second communication network that includes at least a part of the first communication network to the form specialized in the second communication network according to a procedure that has a combined predetermined rule, and manages the user providing network as the second communication network; and an operation function means which manages and controls a configuration component of the second communication network that the user application network configuration management means manages, wherein the user application network configuration management means transmits a control request corresponding to the control to the network management apparatus and controls the configuration component to which the first communication network corresponds when the operation function means controls the second communication network to the configuration component.
(Supplementary note 10) A network information processing method including: converting at the first network information processing apparatus, which manages and controls the first communication network, a network connection configuration of the configuration component concerning the first communication network of a second communication network which includes at least a part of the first communication network to a form of the user providing network specialized to the second communication according to a predetermined conversion rules; transmitting the user providing network to the second network information processing apparatus that manages and controls the second communication network; and managing at the second network information processing apparatus the second communication network based on the transmitted user providing network.
(Supplementary note 11) The network information processing method according to supplementary note 10 characterized in that the first network information processing apparatus converts a network connection configuration of the configuration component concerning the first communication network of the second communication network collected from the first communication network, and memorizes the user providing network corresponding to the predetermined identification information that corresponds to the procedure that has combined the predetermined conversion rules, and to the second communication network.
(Supplementary note 12) The network information processing method according to supplementary note 11 characterized in that the first network information processing apparatus converts occurrence event information when acquiring the occurrence event information concerning the first communication network, to the occurrence event information corresponding to the user providing network based on a procedure that has combined the predetermined conversion rule corresponding to the second communication network which becomes a destination of the occurrence event information and the user providing network, and transmits to the second network information processing apparatus.
(Supplementary note 13) The network information processing method according to supplementary note 11 or 12 characterized in that the second network information processing apparatus transmits the control information that controls the communication network to the first network information processing apparatus based on the network connection configuration displayed on the user providing network, and when the first network information processing apparatus received control information, which controls the second communication network, transmitted from the second network information processing apparatus, the user providing network, which is memorized corresponding to the predetermined identification information corresponding to the second network information processing apparatus, based on the predetermined conversion rule, is inversely converted into a network connection configuration of the first communication network, and a control based on the transmitted control information is applied corresponding to the first communication network inversely converted.
(Supplementary note 14) The network information processing method according to one of supplementary notes of supplementary notes 10 to 13 characterized in that the user providing network is a network connection configuration having a graph structure to which a connection relationship of a configuration component of a network has been expressed in figure, the conversion rule is a rule which uses any one of element concentration which concentrates configuration components of no smaller than two networks in one, element elimination which eliminates a configuration component of an unnecessary network, element addition to which a configuration component of a network which does not exist really is added, element change which changes the connection configuration of the configuration component of a network and identifier change which converts an identifier which specifies a configuration component of a network uniquely.
(Supplementary note 15) A network information processing method including: acquiring network connection configuration information on a first communication network, generating a user providing network which has been converted from a network connection configuration of a configuration component concerning the first communication network of a second communication network that includes at least a part of the first communication network to a form specialized in the second communication network based on a procedure that has combined a predetermined conversion rule; managing a procedure which has combined the generated user providing network and the predetermined conversion rule concerning the predetermined identification information that corresponds the second communication network; and transmitting the user providing network to the user operation apparatus which manages and controls the second communication network.
(Supplementary note 16) The network information processing method according to supplementary note 15 characterized by further including: inversely converting to the configuration of the first communication network in reference with a procedure that has combined the corresponding user providing network based on the predetermined identification information corresponding to the user operation network and the predetermined conversion rule that is used for the conversion to the user providing network when the control request to the user providing network is transmitted from the user operation apparatus, and the control request transmitted from the user operation apparatus based on the configuration of the first communication network that is inversely converted is executed for the configuration component of the first communication network.
(Supplementary note 17) The network information processing method according to supplementary note 15 or 16 characterized in that the user providing network is a network connection configuration having the graph structure in which a connection relationship of a connection component of a network is schematically expressed, and the conversion rule is a rule which uses any one of element concentration which concentrates configuration components of no smaller than two networks in one, element elimination which eliminates a configuration component of an unnecessary network, element addition to which a configuration component of a network which does not exist really is added, element change which changes the connection configuration of the configuration component of a network and identifier change which converts an identifier which specifies a configuration component of a network uniquely.
(Supplementary note 18) A network information processing method including: transmitting a network connection configuration of a configuration component concerning the first communication network of a second communication network which includes at least a part of the first communication network, from a network management apparatus which manages and controls the first communication network as a user providing network that is converted to a form specialized in the second communication network based on the predetermined conversion rule; managing the user providing network as the second communication network; and transmitting a control request corresponding to the control, and the corresponding configuration component of the first communication network controlling when the control is executed to the configuration component of the second communication network.

### Industrial Applicability

The present invention is applicable in the network control of the communication network. The present invention is applicable to the uses such as the information processing apparatus with which a holder of the information that has a graph structure performs the information processing with the cooperation of the third party while concealing details of information.

## Claims

1. A network information processing system comprising:
a first network information processing apparatus that manages and controls a first communication network; and
a second network information processing apparatus which manages and controls the second communication network that includes at least a part of said first communication network, wherein
said first network information processing apparatus includes:
a converting means, which converts a network connection configuration of a configuration component concerning said first communication network of said second communication network into a form of a user providing network specialized in said second communication network under a predetermined conversion rule; and
a transmitting means which transmits said user providing network to said second network information processing apparatus, and
said second network information processing apparatus includes a management means which manages said second communication network based on said user providing network.

2. The network information processing system according to claim 1, **characterized in that**
said converting means of said first network information processing apparatus converts the network connection configuration of the configuration component concerning said first communication network of said second communication network collected from said first communication network into the form of said user providing network according to a procedure which combines predetermined conversion rules, and memorizes said user providing network corresponding to a predetermined identification information which corresponds to the procedure which has combined said predetermined conversion les and said second communication network.

3. The network information processing system according to claim 2 **characterized in that**
when an occurrence event information concerning said first communication network is acquired, said converting means of said first network information processing apparatus converts the occurrence event information into the occurrence event information corresponding to said user providing network based on the procedure which has combined said predetermined conversion rule and said user providing network corresponding to said second communication network that becomes a notification destination of the occurrence event information, and said transmitting means transmits the occurrence event information corresponding to said user providing network to said second network information processing apparatus.

4. The network information processing system according to claim 2 or 3 **characterized in that**
said management means of said second network information processing apparatus transmits the control information which controls said second communication network based on the network connection configuration shown in said user providing network to said first network information processing apparatus,
said first network information processing apparatus which includes:
an inverse converting means that inversely converts said user providing network which memories corresponding to said predetermined identification information which corresponds to the second network information processing apparatus to the network connection configuration of said first communication network based on the procedure which combines said predetermined conversion rule when the control information which controls said second communication network has been transmitted from said second network information processing apparatus; and
a setting execution means which applies the control based on said transmitted control information corresponding to said first communication network which has been inversely converted.

5. The network information processing system according to one of claims 1 to 4 **characterized in that**
said user providing network is a network connection configuration having a graph structure in which a connection relationship of a configuration component of a network has been schematically expressed,
said conversion rule is a rule which uses any one of element concentration which concentrates configuration components of no smaller than two networks in one, element elimination which eliminates a configuration component of an unnecessary network, element addition to which a configuration component of a network which does not exist really is added, element change which changes the connection configuration of the configuration component of a network and identifier change which converts an identifier which specifies a configuration component of a network uniquely.

6. A network information processing apparatus comprising:
a network information collection/network configuration management means which acquires and manages network connection configuration information on a first communication network;
a network configuration converting means which generates a user providing network which has converted a network connection configuration of a configuration component concerning said first communication network, which said network information collection/network configuration management means of the second communication network including at least a part of said first communication network manages, into a form specialized in said second communication network according to a procedure that has combined predetermined conversion rules; and
an information sending and receiving means which transmits said user providing network that said network configuration converting means has generated to a user operation apparatus which manages and controls said second communication network,
wherein said first communication network is managed and controlled.

7. The network information processing apparatus according to claim 6 **characterized by** further comprising:
a user providing network management means which manages said user providing network that the network configuration converting means has generated corresponding to a predetermined identification information corresponding to said second communication network;
a conversion key management means which manages a procedure that has combined said predetermined conversion rules said network configuration converting means has used for the conversion to said user providing network;
a configuration mapping means which inversely converts to the configuration of said first communication network in reference with a procedure that has combined said predetermined conversion rule used for the conversion of said user providing network and said corresponded user providing network from said user providing network management means and said conversion key management means based on said predetermined identification information corresponding to said user operation apparatus when the control request for said user providing network is transmitted from said user operation apparatus via said information sending and receiving means; and
a setting execution means which executes the control request which has been transmitted from said user operation apparatus based on the configuration of said first communication network that said configuration mapping means has converted for a component of said first communication network.

8. The network information processing apparatus according to claim 6 or 7 **characterized in that**
said user providing network is a network connection configuration having a graph structure to which a connection relationship of a component of a network has been schematically expressed, and
said conversion rule is a rule which uses any one of element concentration which concentrates configuration components of no smaller than two networks in one, element elimination which eliminates a configuration component of an unnecessary network, element addition to which a configuration component of a network which does not exist really is added, element change which changes the connection configuration of the configuration component of a network and identifier change which converts an identifier which specifies a configuration component of a network uniquely.

9. A network information processing apparatus which manages and controls the second communication network comprising:
a user application network configuration converting means which receives the transmission from a network management apparatus which manages and controls a first communication network as a user providing network which has converted a network connection configuration of a configuration component concerning said first communication network in said second communication network that includes at least a part of the first communication network to the form specialized in said second communication network according to a procedure that has a combined predetermined rule, and manages said user providing network as said second communication network; and
an operation function means which manages and controls a configuration component of said second communication network that said user application network configuration management means manages, wherein
said user application network configuration management means transmits a control request corresponding to said control to said network management apparatus and controls the configuration component to which said first communication network corresponds when said operation function means controls said second communication network to the configuration component.

10. A network information processing method comprising:
converting at the first network information processing apparatus, which manages and controls the first communication network, a network connection configuration of the configuration component concerning said first communication network of a second communication network which includes at least a part of said first communication network to a form of the user providing network specialized to said second communication according to a predetermined conversion rules;
transmitting said user providing network to the second network information processing apparatus that manages and controls said second communication network; and
managing at said second network information processing apparatus said second communication network based on said transmitted user providing network.

11. The network information processing method according to claim 10 **characterized in that**
said first network information processing apparatus converts a network connection configuration of the configuration component concerning said first communication network of said second communication network collected from said first communication network, and memorizes said user providing network corresponding to the predetermined identification information that corresponds to the procedure that has combined said predetermined conversion rules, and to said second communication network.

12. The network information processing method according to claim 11 **characterized in that**
said first network information processing apparatus converts occurrence event information when acquiring the occurrence event information concerning said first communication network, to the occurrence event information corresponding to said user providing network based on a procedure that has combined said predetermined conversion rule corresponding to said second communication network which becomes a destination of the occurrence event information and said user providing network, and transmits to said second network information processing apparatus.

13. The network information processing method according to claim 11 or 12 **characterized in that**
said second network information processing apparatus transmits the control information that controls said communication network to said first network information processing apparatus based on the network connection configuration displayed on said user providing network, and
when said first network information processing apparatus received control information, which controls said second communication network, transmitted from said second network information processing apparatus, said user providing network, which is memorized corresponding to said predetermined identification information corresponding to said second network information processing apparatus, based on said predetermined conversion rule, is inversely converted into a network connection configuration of said first communication network, and a control based on said transmitted control information is applied corresponding to said first communication network inversely converted.

14. The network information processing method according to one of claims of claims 10 to 13 **characterized in that**
said user providing network is a network connection configuration having a graph structure to which a connection relationship of a configuration component of a network has been expressed in figure,
said conversion rule is a rule which uses any one of element concentration which concentrates configuration components of no smaller than two networks in one, element elimination which eliminates a configuration component of an unnecessary network, element addition to which a configuration component of a network which does not exist really is added, element change which changes the connection configuration of the configuration component of a network and identifier change which converts an identifier which specifies a configuration component of a network uniquely.

15. A network information processing method comprising:
acquiring network connection configuration information on a first communication network,
generating a user providing network which has been converted from a network connection configuration of a configuration component concerning said first communication network of a second communication network that includes at least a part of said first communication network to a form specialized in said second communication network based on a procedure that has combined a predetermined conversion rule;
managing a procedure which has combined said generated user providing network and said predetermined conversion rule concerning the predetermined identification information that corresponds said second communication network; and
transmitting said user providing network to the user operation apparatus which manages and controls said second communication network.

16. The network information processing method according to claim 15 **characterized by** further comprising:
inversely converting to the configuration of said first communication network in reference with a procedure that has combined said corresponding user providing network based on said predetermined identification information corresponding to said user operation network and said predetermined conversion rule that is used for the conversion to said user providing network when the control request to said user providing network is transmitted from said user operation apparatus, and
the control request transmitted from said user operation apparatus based on the configuration of said first communication network that is inversely converted is executed for the configuration component of said first communication network.

17. The network information processing method according to claim 15 or 16 **characterized in that**
said user providing network is a network connection configuration having the graph structure in which a connection relationship of a connection component of a network is schematically expressed, and
said conversion rule is a rule which uses any one of element concentration which concentrates configuration components of no smaller than two networks in one, element elimination which eliminates a configuration component of an unnecessary network, element addition to which a configuration component of a network which does not exist really is added, element change which changes the connection configuration of the configuration component of a network and identifier change which converts an identifier which specifies a configuration component of a network uniquely.

18. A network information processing method comprising:
transmitting a network connection configuration of a configuration component concerning said first communication network of a second communication network which includes at least a part of the first communication network, from a network management apparatus which manages and controls said first communication network as a user providing network that is converted to a form specialized in said second communication network based on the predetermined conversion rule;
managing said user providing network as said second communication network; and
transmitting a control request corresponding to said control, and the corresponding configuration component of said first communication network controlling when the control is executed to the configuration component of said second communication network.
